# EUROPEAN PATENT SPECIFICATION

(11) **EP 3 476 379 B1**
(45) Date of publication and mention of the grant of the patent: **03.06.2020**
(21) Application number: 18203261.5
(22) Date of filing: 30.10.2018
(51) Int. Cl.: A61G 3/06, B60P 1/43, B60R 19/38

(54) **METHOD FOR ARRANGING A FASTENING TRAY FOR A WHEELCHAIR IN A CAR AND A WHEELCHAIR TRANSPORTATION CAR**
VERFAHREN ZUR ANORDNUNG EINER BEFESTIGUNGSABLAGE FÜR EINEN ROLLSTUHL IN EINEM AUTO UND EIN ROLLSTUHLTRANSPORTAUTO
PROCÉDÉ D'AGENCEMENT D'UN PLATEAU DE FIXATION POUR FAUTEUIL ROULANT DANS UNE VOITURE ET VÉHICULE DE TRANSPORT DE FAUTEUILS ROULANTS

(30) Priority: 31.10.2017 FI 20175962
(43) Date of publication of application: 01.05.2019
(73) Proprietor: Autokori ja verhoilu J Lehtinen Oy, 21420 Lieto (FI)
(72) Inventor: LEHTINEN, Jukka, 21420 Lieto (FI)
(74) Representative: Berggren Oy, Turku

(56) References cited:
- FR-A1- 2 887 504
- GB-A- 2 276 592
- US-A1- 2004 256 827

## Description

### TECHNICAL FIELD OF THE INVENTION

The invention relates to a method for arranging a fastening tray for a wheelchair in a car according to the preamble of the independent claim presented further below. The invention especially relates to a new manner of transforming a car, such as a passenger car, into a wheelchair transportation car.

### PRIOR ART

In order to transport someone sitting in a wheelchair, it is known to arrange spaces and aids especially suited for wheelchairs in cars. A ramp or a lifting device for making it easier to get the wheelchair into the car can be arranged in connection with the side or rear door of the car.

Many cars, for example passenger cars, are so low that someone sitting in a wheelchair cannot fit to ride. One known solution is to lower a part of the car floor lower than it originally was. Thus, the original floor is removed from at least a part of the car and a lowered floor section is attached in its place.

It is known to form the lowered floor section from a specific wheelchair fastening tray. In the tray it is easy to install for example a wheelchair ramp and sturdy fastening points for a wheelchair.

A wheelchair ramp and a wheelchair fastening tray are presented for example in publication GB 2276592 A.

Publication US 2004/0256827 discloses a method of converting a front-wheel-drive vehicle to enable or improve wheelchair accessibility to the vehicle. The method includes the steps of removing an existing rear suspension from the vehicle, installing rear suspension mountings to the vehicle, one at each side of the structure of the vehicle, and lowering a portion of the floorpan of the vehicle between said rear suspension mountings.

In some cars it is difficult to fit a sufficiently large wheelchair tray. In the width direction of the car, one common obstacle is the shock absorbers of the rear tires. They are typically fastened to the car body by their upper end. The fastening of the upper end of the shock absorbers is often arranged on a fixed and mainly horizontal bolt. The bolt is typically attached to the car body in a fixed manner, for example by welding. Thus, in order to detach and re-attach the shock absorber, it must be moved in a lateral direction. If the car floor were to be lowered by the shock absorber fastening point down close to the bolt, the lowered floor, such as the wheelchair fastening tray, would prevent said lateral movement.

Especially if the length direction of the car has limitations with regards to the size of the fastening tray, it would be good for the lowered floor section to be as wide as possible.

Electric cars have particular problems. The battery is often placed under the car floor and it often extends far from the front of the car toward the rear. The components of electric cars, such as batteries, often make it difficult to lower floors. Welding is for example not easy to perform close to batteries.

### OBJECT OF THE INVENTION

The object of the present invention is to reduce or even eliminate the above-mentioned problems appearing in prior art.

It is an object of the present invention to provide a solution, with which a sufficiently large wheelchair fastening tray can be placed in a smaller wheelchair transportation car than previously.

It is an object of the present invention to make possible the use of wider wheelchair fastening trays than previously, especially in passenger cars.

It is an object of the present invention to make it easier and quicker to safely install a wheelchair fastening tray in a car.

It is an object of the present invention to improve the possibilities of transporting a wheelchair for example in small cars and electric cars.

### BRIEF DESCRIPTION OF THE INVENTION

In order to achieve the objects mentioned above, among others, the method according to the invention as well as other objects of the invention are characterized by what is presented in the characterizing part of the enclosed independent claim.

The embodiment examples and advantages mentioned in this text relate, where applicable, to both the method and the wheelchair transportation car, even if this is not always specifically mentioned.

A typical method according to the invention for arranging a wheelchair fastening tray in a car comprises at least the following steps:
- removing the original car floor at least mainly in the part between at least two shock absorbers;
- detaching said at least two shock absorbers from their fixed fastening bolts;
- cutting the original fixed fastening bolts for shock absorbers by the removed floor from the car body;
- drilling holes in the car body for detachable fastening bolts for shock absorbers;
- installing detachable fastening bolts for shock absorbers in the holes;
- attaching the shock absorbers in a detachable manner to the detachable fastening bolts for shock absorbers;
- installing a wheelchair fastening tray to form a new lowered car floor between the shock absorbers.

A typical wheelchair transportation car comprises
- a wheelchair fastening tray, which forms a lowered car floor, which has been retrofitted between two shock absorbers in the car;
- points in the car body by the wheelchair fastening tray, from which points the original fastening bolts of the shock absorbers have been removed;
- holes drilled in the car body for detachable fastening bolts for shock absorbers;
- detachable fastening bolts for shock absorbers retrofitted in said holes.

It has thus now been found that additional space is obtained for the fastening tray by exchanging fixed fastening bolts of the shock absorbers for detachable ones. The shock absorbers can thus be exchanged without the floor section lowered at their point hindering the work very much. When detaching a shock absorber, its fastening bolt is detached from the shock absorber and pulled out of its hole in the body. Thus, the shock absorber can be pulled out from between the car body and the fastening tray without a lateral movement. Due to the invention, wheelchair fastening trays can be wider than previously in more cars than before. The installation work of the wheelchair fastening tray becomes easier.

In one embodiment of the invention, the detachable fastening bolts for shock absorbers are installed substantially in the same place where the original shock absorber fastening bolts were. This makes the installation easier.

The sizes of the detachable fastening bolts and holes can be selected to suit each situation. The detachable fastening bolt and the hole made for it in the body can have a diameter of for example 10-20 mm or 14-17 mm or 16 mm.

In one embodiment of the invention, the holes made in the car body for the detachable shock absorber fastening bolts extend through that entire car body part, for example the body beam. In one embodiment of the invention, the detachable shock absorber fastening bolts are so long that they extend through said car body part.

In one embodiment of the invention, the wheelchair fastening tray is attached as a lowered car floor without welding. A screw attachment, such as bolts or rivets, can for example be used as fastening means. Thus, it is safe to install the fastening tray. For example in electric cars, the work is easier, the fastening tray can safely be installed even attached to the battery.

In one embodiment of the invention, the wheelchair fastening tray is attached as a lowered car floor by gluing. Gluing is particularly easy and safe. Gluing is a strong fastening means. In addition to gluing, some other fastening means can also be used, for example a screw attachment.

In one embodiment of the invention, the car is an electric car, which comprises a battery. In one embodiment of the invention, the wheelchair fastening tray is installed behind the battery of the electric car. The solution according to the invention makes it more efficient and easier to install a wheelchair fastening tray, particularly in electric cars. With the aid of the invention, even small electric cars can be transformed into efficient transportation means for someone using a wheelchair.

In one embodiment of the invention the car comprises a rear door and the wheelchair fastening tray is installed in the rear end of the car, so that the passage of the wheelchair is arranged through the rear door.

In one embodiment of the invention the car comprises a wheelchair ramp. The ramp is arranged to extend through the rear door of the car toward the back to the ground, when the rear door is open. When the rear door is closed, the ramp can be folded for example between the rear door and the wheelchair fastening tray.

In one embodiment of the invention, a horizontal support beam is arranged at the bottom edge of the rear door opening of the car, which support beam extends in the horizontal direction over the edges of the opening. When the support beam is supported on the edges of the opening, it is easy to make so sturdy that it offers safety if a collision hits the car from behind. The support beam thus prevents for example the wheelchair ramp from moving into the passenger space. The support beam can extend in the horizontal also over the edges of the wheelchair fastening tray or over some other part of the car body, and support the structure in the above-mentioned way in a collision situation.

In one embodiment of the invention, the horizontal support beam is attached to the bottom edge of the rear door opening in a turning manner and arranged to open outward from the rear door opening, when the wheelchair ramp is opened to extend to the ground. It thus functions as a support structure for the ramp. At the same time, opening the support beam makes the rear door opening larger, whereby the wheelchair can fit to pass through the opening easier.

### BRIEF DESCRIPTION OF THE FIGURES

The invention is described in more detail below with reference to the enclosed schematic drawing, in which
- Figure 1: shows a car according to the invention seen from the side,
- Figure 2: shows a wheelchair fastening tray according to the invention,
- Figure 3: shows a car according to the invention from behind and a part of it as two magnifications, and
- Figure 4: shows a car according to the invention from above.

### DETAILED DESCRIPTION OF THE EXAMPLES OF THE FIGURES

For the sake of clarity, the same reference numerals are used for some corresponding parts in different figures and embodiments.

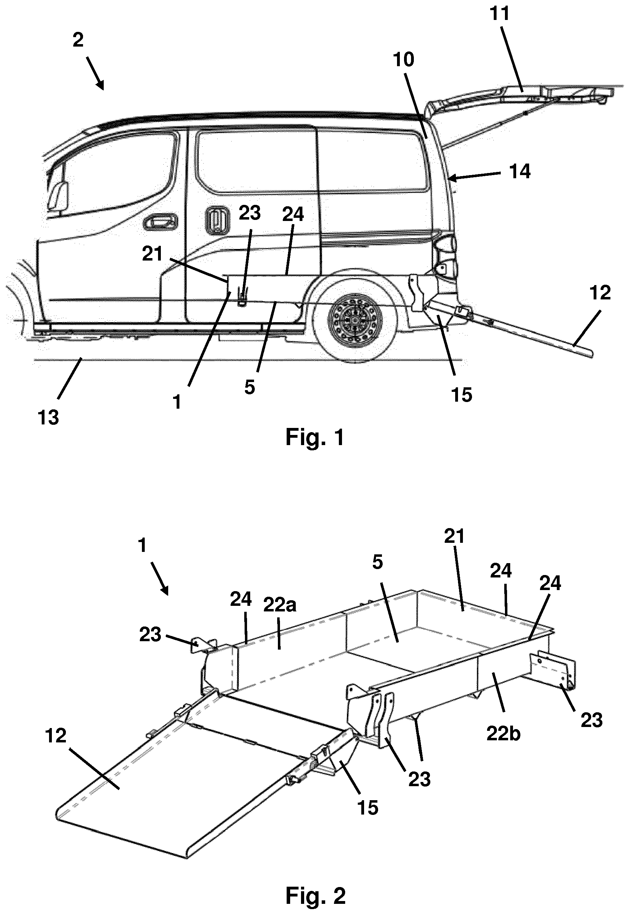

Figures 1-4 show the wheelchair transportation car 2 according to the invention and the wheelchair fastening tray 1 arranged inside it. At the rear end 10 of the car there is a rear door 11. The wheelchair fastening tray 1 is arranged in the rear end 10 of the car. The passage of the wheelchair is arranged through the rear door 11 of the car, along a wheelchair ramp 12. In the situation showed by Figures 1, 3 and 4, the rear door 11 is open and the wheelchair ramp 12 is set to extend back from the rear door 11 of the car, to the ground 13. When the rear door 11 is closed (not shown), the wheelchair ramp 12 is folded between the rear door 11 and the wheelchair fastening tray 1.

Figure 2 shows the wheelchair fastening tray 1 in more detail. The fastening tray 1 has a substantially horizontal bottom 5 and a substantially vertical front wall 21 and side walls 22a and 22b. The fastening tray 1 has support structures 23, which support the tray 1 and by means of which the tray 1 can be supported and attached to the car 2 body. Mainly horizontal flanges 24 have been formed in the upper edges of the front wall 21 and side walls 22a and 22b, which flanges in turn support the fastening tray 1 and from which it can be attached for example to a car's 2 original floor 25. A horizontal support beam 15 has been attached on hinges to the rear edge of the bottom 5. From Figure 1 can be seen that the support beam 15 is installed at the bottom edge of the opening 14 of the rear door 11 of the car 2. The support beam 15 opens outward from the rear door 11 opening 14. The wheelchair ramp 12 is attached by its upper end to the support beam 15. The support beam 15 extends in the horizontal direction over the side walls 22a and 22b of the fastening tray 1. When installed in a car 2, the support beam 15 can extend in the horizontal direction at the same time also over the edges of the rear door 11 opening 14 or other part of the car 2 body. In a collision situation, the side walls 22a and 22b or edges or body of the car 2 prevent the support beam 15 and simultaneously the wheelchair ramp 12 in front of it from pushing into the passenger space.

The wheelchair transportation car 2 can be an electric car, which comprises a battery arranged for example under the floor level (not shown). The wheelchair fastening tray 1 can be arranged completely behind the battery. The front edge of the fastening tray 1 can be arranged very close to the battery or even right by the rear edge of the battery.

When installing the wheelchair fastening tray 1, a part of the original floor 25 of the car 2 is first removed. In the examples of the figures, the original floor 25 is removed in the transverse direction of the car 2 in the part between the shock absorbers 3a and 3b of the rear axis 26. In the longitudinal direction of the car 2, the original floor 25 is removed from the rear door 11 opening 14 forward all the way to the front seats 27. The size of the removed part of the floor 25 approximately corresponds to the size of the wheelchair fastening tray 1. The fastening tray 1 is installed in the place of said removed floor, so that the bottom 5 of the fastening tray 1 forms the lowered floor of the car 2. The flanges 24 of the front wall 21 and side walls 22a, 22b of the fastening tray 1 attach the tray 1 to the original floor 25 of the car 2. The support structures 23 of the fastening tray 1 are attached to desired points, for example to the car 2 body. The attaching of the flanges 24 and support structures 23 is done in the example of the figures at least mainly by gluing. The fastenings can be fortified for example with screw joints or rivets.

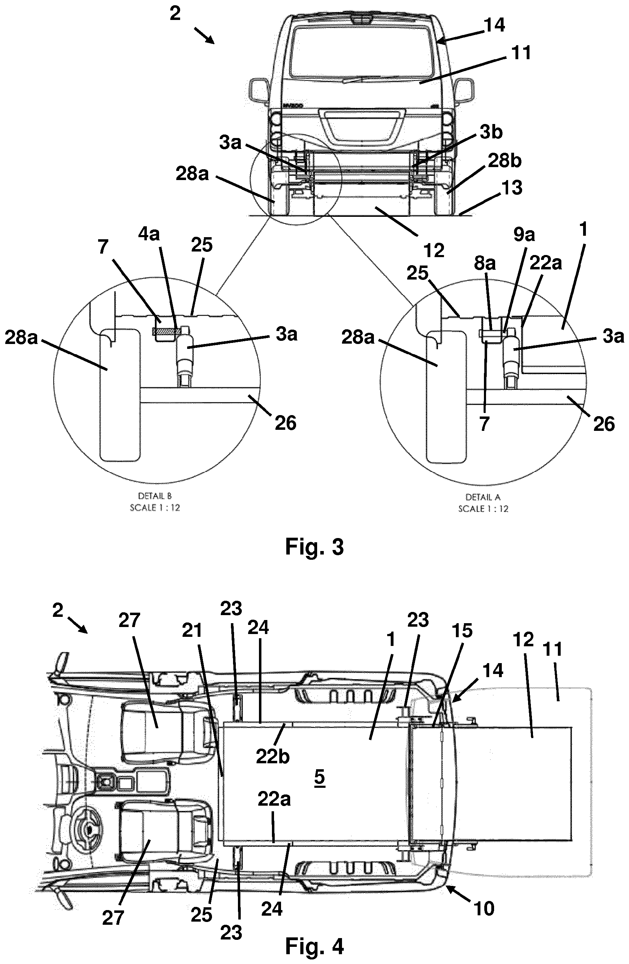

Figure 3 shows in more detail the structures of the left side of the car 2. The corresponding parts exist and the corresponding work steps are naturally done also on the right side of the car 2. The position of the wheelchair ramp 12 when lowered to the ground is shown as an example in Figure 3, even though the rear door 11 is closed. The rear door 11 can generally not be closed if the ramp 12 is outside the door 2. Figures 1 and 4 show the position of the rear door 11 when open, when the wheelchair ramp 12 is outside the car 2.

The magnified detail B of Figure 3 shows the attaching of the shock absorber 3a to the car 2 before the wheelchair fastening tray 1 is installed. The fastening bolt 4a is welded to the body beam 7 in an immobile and fixed manner. The upper end of the shock absorber 3a is attached to the fastening bolt 4a and the lower end to the rear axis 26 of the car 2. The left rear tire 28a is attached to the end of the axis 26. The original floor 25 of the car 2 is above the body beam 7. If the shock absorber 3a needs to be replaced, there is sufficient room under the car 2 to pull the upper end of the shock absorber 3a from its fastening bolt 4a toward the centre line of the car 2, i.e. toward the right in the figure.

The magnified detail A of Figure 3 shows the attaching of the shock absorber 3a to the car 2 after the wheelchair fastening tray 1 is installed. It can be seen that the left side wall 22a of the fastening tray 1 now prevents the moving of the upper end of the shock absorber 3a away from the fixed fastening bolt toward the right in the figure.

The attaching of the upper end of the shock absorber 3a to the body of the car 2 has been changed in the following way: Before installing the fastening tray 1, the upper end of the shock absorber 3a is detached from its fastening bolt 4a. Thereafter the original fastening bolt 4a of the shock absorber 3a is cut from the car 2 body 7. Only a part of the fastening bolt 4a can be removed, for example the part pointing from the body beam 7 toward the fastening tray 1. A hole 8a meant for the new fastening bolt 9a, which is meant to be detachable, is drilled in the body beam 7. The new hole 8a is drilled through the beam 7, so that the bolt 9a can if so desired be moved to the left and right of the beam 7 in the figure. The new detachable bolt 9a is placed at least approximately by the previous fastening bolt 4a. The new bolt 9a is installed in the hole 8a and the wheelchair fastening tray 1 is installed in place. The upper end of the shock absorber 3a can now, by moving the bolt 9a to the left in the figure, be attached and detached from between the body beam 7 and fastening tray 1.

It is not intended to limit the invention to the presented examples, but the scope is defined by the independent claim. The dependent claims present some preferred applications of the invention.

## Claims

1. A method for arranging a wheelchair fastening tray (1) in a car (2), which method comprises at least the following steps:
- removing a part of the original car floor (25) at least mainly in the part between at least two shock absorbers (3a, 3b);
- detaching said at least two shock absorbers (3a, 3b) from their fixed fastening bolts (4a);
- installing a wheelchair fastening tray (1) to form a lowered car floor (5) between the shock absorbers (3a, 3b);
**characterized in that** the method further comprises at least the following steps:
- cutting the original fixed fastening bolts (4a) for shock absorbers (3a, 3b) by the wheelchair fastening tray (1) from the car body (7);
- drilling holes (8a) in the car body (7) for detachable fastening bolts (9a) for shock absorbers (3a, 3b);
- installing detachable fastening bolts (9a) for shock absorbers (3a, 3b) in the holes (8a);
- attaching the shock absorbers (3a, 3b) in a detachable manner to the detachable fastening bolts (9a) of the shock absorber (3a, 3b).

2. The method according to claim 1, **characterized in**
- installing the detachable fastening bolts (9a) for shock absorbers (3a, 3b) substantially in the same place where the original shock absorber fixed fastening bolts (4a) were.

3. The method according to any of the preceding claims 1-2, **characterized in**
- attaching the wheelchair fastening tray (1) as a lowered car floor (5) without welding.

4. The method according to any of the preceding claims 1-3, **characterized in**
- attaching the wheelchair fastening tray (1) as a lowered car floor (5) by gluing.

5. The method according to any of the preceding claims 1-4, **characterized in**
- installing the wheelchair fastening tray (1) in the rear end (10) of the car (2), so that the passage of the wheelchair is arranged through the rear door (11).

6. The method according to any of the preceding claims 1-5, **characterized in that** the car (2) is an electric car, which comprises a battery, whereby
- the wheelchair fastening tray (1) is installed behind the battery.

## Patentansprüche

1. Verfahren zur Anordnung einer Rollstuhl-Befestigungsablage (1) in einem Fahrzeug (2), wobei das Verfahren wenigstens die folgenden Schritte umfasst:
- Entfernen eines Teils des ursprünglichen Fahrzeugbodens (25) wenigstens hauptsächlich im Teil zwischen zwei Stoßdämpfern (3a, 3b);
- Abnehmen der wenigstens zwei Stoßdämpfer (3a, 3b) von ihren stationären Befestigungsbolzen (4a);
- Montieren einer Rollstuhl-Befestigungsablage (1) zum Bilden eines abgesenkten Fahrzeugbodens (5) zwischen den Stoßdämpfern (3a, 3b);
**dadurch gekennzeichnet, dass** das Verfahren ferner wenigstens die folgenden Schritte umfasst:
- Kürzen der ursprünglichen stationären Befestigungsbolzen (4a) für Stoßdämpfer (3a, 3b) durch die Rollstuhl-Befestigungsanlage (1) von der Fahrzeugkarosserie (7);
- Bohren von Löchern (8a) in die Fahrzeugkarosserie (7) für abnehmbare Befestigungsbolzen (9a) für Stoßdämpfer (3a, 3b);
- Montieren von abnehmbaren Befestigungsbolzen (9a) für Stoßdämpfer (3a, 3b) in den Löchern (8a);
- Anbringen der Stoßdämpfer (3a, 3b) in abnehmbarer Weise an den abnehmbaren Befestigungsbolzen (9a) der Stoßdämpfer (3a, 3b).

2. Verfahren nach Anspruch 1, **gekennzeichnet durch**
- Montieren der abnehmbaren Befestigungsbolzen (9a) für Stoßdämpfer (3a, 3b) im Wesentlichen an derselben Stelle, an der sich die ursprünglichen stationären Befestigungsbolzen (4a) für Stoßdämpfer befanden.

3. Verfahren nach einem beliebigen der vorstehenden Ansprüche 1-2, **gekennzeichnet durch**
- Befestigen der Rollstuhl-Befestigungsablage (1) als abgesenkter Fahrzeugboden (5) ohne Schweißen.

4. Verfahren nach einem beliebigen der vorstehenden Ansprüche 1-3, **gekennzeichnet durch**
- Befestigen der Rollstuhl-Befestigungsablage (1) als abgesenkter Fahrzeugboden (5) durch Kleben.

5. Verfahren nach einem beliebigen der vorstehenden Ansprüche 1-4, **gekennzeichnet durch**
- Montieren der Rollstuhl-Befestigungsablage (1) am hinteren Ende (10) des Fahrzeugs (2), so dass der Zugang des Rollstuhls durch die Hecktür (11) vorgenommen wird.

6. Verfahren nach einem beliebigen der vorstehenden Ansprüche 1-5, **dadurch gekennzeichnet, dass** das Fahrzeug (2) ein Elektrofahrzeug ist, das eine Batterie umfasst, wobei
- die Rollstuhl-Befestigungsablage (1) hinter der Batterie montiert wird.

## Revendications

1. Procédé d'agencement d'un plateau de fixation (1) pour fauteuil roulant dans un véhicule (2), lequel procédé comprend au moins les procédés suivants :
- retrait d'une partie du sol du véhicule d'origine (25) au moins principalement dans la partie entre au moins deux pare-chocs (3a, 3b) ;
- séparation desdits deux pare-chocs (3a, 3b) de leurs boulons de fixation fixes (4a) ;
- installation d'un plateau de fixation (1) pour fauteuil roulant pour former un sol de véhicule abaissé (5) entre les pare-chocs (3a, 3b) ;
**caractérisé en ce que** le procédé comprend également au moins les étapes suivantes :
- couper les boulons de fixation fixes (4a) d'origine pour les pare-chocs (3a, 3b) près du plateau de fixation (1) pour fauteuil roulant, du corps du véhicule (7) ;
- percer des trous (8a) dans le corps du véhicule (7) pour des boulons de fixation séparables (9a) pour des pare-chocs (3a, 3b) ;
- monter des boulons de fixation séparables (9a) pour des pare-chocs (3a, 3b) dans les trous (8a) ;
- fixer les pare-chocs (3a, 3b) de manière séparable aux boulons de fixation séparables (9a) du pare-chocs (3a, 3b).

2. Procédé selon la revendication 1, caractérisé en
- le montage des boulons de fixation séparables (9a) pour les pare-chocs (3a, 3b) essentiellement à la même place où étaient les boulons de fixation fixes (4a) de pare-chocs d'origine.

3. Procédé selon l'une quelconque des revendications 1-2, caractérisé en
- la fixation du plateau de fixation (1) pour fauteuil roulant en tant qu'un sol de véhicule abaissé (5) sans soudure.

4. Procédé selon l'une quelconque des revendications 1-3, caractérisé en
- la fixation du plateau de fixation (1) pour fauteuil roulant en tant qu'un sol de véhicule abaissé (5) par collage.

5. Procédé selon l'une quelconque des revendications 1-4, caractérisé en
- l'installation du plateau de fixation (1) pour fauteuil roulant dans l'extrémité arrière (10) du véhicule (2) de façon à ce que le passage du fauteuil roulant soit agencé à travers la porte arrière (11).

6. Procédé selon l'une quelconque des revendications 1-5, **caractérisé en ce que** le véhicule (2) est un véhicule électrique qui comprend une batterie, ce par quoi
- le plateau de fixation (1) pour fauteuil roulant est monté derrière la batterie.
